# EUROPEAN PATENT APPLICATION

(11) **EP 4 761 314 A1**
(43) Date of publication of application: **17.06.2026**
(21) Application number: 24220188.7
(22) Date of filing: 16.12.2024
(51) Int. Cl.: H04W 12/08, H04L 9/40, H04W 12/60, H04W 12/69, H04W 12/72

(54) **TECHNIQUES FOR INCORPORATING STAKEHOLDER IDENTIFICATION IN DECENTRALIZED IDENTIFIERS FOR SECURE COMMUNICATION**

(71) Applicant: Deutsche Telekom AG, 53113 Bonn (DE)
(72) Inventor: SCHNEIDER, Daniela, 1150 Wien (AT)
(74) Representative: karo IP

(57) **Abstract**

A method and system for a communication between a first network element and a second network element in a communication system utilizing decentralized identifiers (DIDs), the method comprising:
a) using, by the first network element, a DID comprising:
i) a unique identifier uniquely associated with the first network element; and
ii) a stakeholder identifier associated with the first network element and/or a mobile virtual network operator, MVNO, identification associated with the first network element;

b) transmitting, from the first network element to the second network element, a request message comprising the DID;
c) receiving, at the second network element, the request message and extracting the stakeholder identifier and/or extracting the MVNO identification from the DID;
d) evaluating, at the second network element, the stakeholder identifier based on a first criteria, in particular a first security criteria, and/or evaluating the MVNO identification based on a second criteria, in particular a second security criteria;
e) determining, based on the evaluation, whether to accept or deny the request for establishing a communication; and
f) establishing a communication, in particular a secure communication, between the first and second network elements if the request is accepted.

## Description

The present invention relates to techniques for establishing secure communication in network environments using decentralized identifiers (DIDs). More particularly, it involves embedding stakeholder and/or operator identification into DIDs to enable early security decisions during communication initialization, with applications in mobile network environments and systems leveraging decentralized identity frameworks.

Decentralized Identifiers (DIDs) are a type of identifier designed to facilitate secure and privacy-preserving communication in decentralized systems. A DID is a string formatted according to standards such as the W3C DID specification. It does not directly contain personal or identifying information but instead serves as a reference to a DID document, which stores key metadata necessary for secure communication.

A DID document is a structured file, typically in JSON format, that provides information about the DID holder. It includes details such as public keys for verifying digital signatures or encrypting messages, service endpoints for facilitating communication, and authentication methods that the DID holder can use to prove ownership of the DID. These components allow DIDs to function without relying on centralized authorities. DID documents are often stored in Verifiable Data Registries (VDRs), which are implemented using Distributed Ledger Technology (DLT), such as blockchain systems.

For example, consider a scenario where a mobile device wants to establish secure communication with a payment gateway. The mobile device generates a DID, such as "did:example:123456789abcdef," and includes it in an initial request message sent to the payment gateway. Upon receiving the DID, the payment gateway retrieves the associated DID document from a VDR or decentralized ledger. The DID document contains information such as public keys for verifying digital signatures and service endpoints that the payment gateway can use to communicate with the mobile device.

The DID document can look like this:

```
 {
 "@context": "https://www.w3.org/ns/did/v1",
 "id": "did:example:123456789abcdef",
 "publicKey": [{
      "id": "did:example: 123456789abcdef#keys-1",
      "type": "RsaVerificationKey2018",
      "controller": "did:example:123456789abcdef",
      "publicKeyPem": "-----BEGIN PUBLIC KEY-----\nMIIBIjANBgkqh..."}],
 "service": [{
      "id": "did:example: 123456789abcdef#payment",
      "type": "PaymentGateway", "serviceEndpoint":
      "https://example.com/payment" }]
 }
```

Using the public key in the DID document, the payment gateway verifies the DID by authenticating a digital signature provided by the mobile device. Once the verification is successful, the mobile device and the payment gateway establish an encrypted channel for secure communication. Through this channel, the mobile device can transmit sensitive transaction data, such as payment details, to the payment gateway.

This process demonstrates how DIDs and DID documents work together to enable secure and verifiable interactions while preserving the privacy of the DID holder.

Decentralized identifiers (DIDs) are gaining prominence as a mechanism for enabling secure, privacy-preserving interactions between entities. DIDs, along with DID documents and Verifiable Data Registries (VDRs), are often implemented using Distributed Ledger Technology (DLT) to support key exchanges and authentication processes. Existing DID specifications, however, mandate that no personal or identifying information about the DID owner or stakeholder is stored in the DID document. Consequently, the DID itself is typically a random identifier string that uniquely identifies a network element without providing any information about the network operator or stakeholder associated with it.

In mobile network environments, this approach presents several challenges. When two entities that have not yet exchanged DIDs initiate communication, the process requires a significant number of steps to establish secure communication. The receiving network element must retrieve the sender's DID document from a Verifiable Data Registry, verify the DID holder's authenticity, establish a secure channel, and process the sender's request. This entire procedure may occur even before the receiving network element determines whether it wishes to communicate with the sender. Such an approach consumes considerable processing resources and increases susceptibility to attacks, such as denial-of-service (DoS) attacks, which flood the receiving network element with excessive requests.

Currently, no mechanism exists to allow a receiving network element to make an early security decision based on stakeholder or operator information embedded in the DID. Existing methods rely solely on routable identifiers to facilitate message transmission, leaving no capacity for preemptive security measures based on the sender's network affiliation.

It is the task of the invention to provide techniques for enabling efficient handling of DID when setting up a communication between network elements.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to a first aspect of the invention, a method for establishing secure communication between a first network element and a second network element in a communication system utilizing decentralized identifiers (DIDs) is disclosed, the method comprising:
a) using, by the first network element, a DID comprising i) a unique identifier uniquely associated with the first network element; and ii) a stakeholder identifier associated with the first network element and/or a mobile virtual network operator, MVNO, identification;
b) transmitting, from the first network element to the second network element, a request message comprising the DID;
c) receiving, at the second network element, the request message and extracting the stakeholder identifier and/or extracting the MVNO identification from the DID;
d) evaluating, at the second network element, the stakeholder identifier based on a first criteria, in particular a first security criteria, and/or evaluating the MVNO identification based on a second criteria, in particular a second security criteria;
e) determining, based on the evaluation, whether to accept or deny the request for establishing a communication; and
f) establishing a communication, in particular a secure communication, between the first and second network elements if the request is accepted.

In particular, the method can be executed in the steps having the exact order a)- f).

This introduces a method for securely establishing communication between two network elements using DIDs enhanced with stakeholder and/or MVNO identification. The method addresses inefficiencies in conventional DID-based communication by enabling early evaluation of security-relevant information within the DID itself. By including both Stakeholder ID and MVNO ID, the method ensures that decisions about initiating communication are informed by comprehensive and trusted information. This approach reduces resource waste, particularly in scenarios where communication is ultimately rejected, and enhances protection against denial-of-service (DoS) attacks by preemptively identifying and rejecting untrusted sources, leading to a more secure and efficient communication establishment process.

In an embodiment, the first network element either gets the DID assigned by an external functionality or it generates the DID by itself.

This enables the first network element to dynamically create DIDs without relying on external entities, ensuring that the identifier accurately reflects the real-time state and context of the network element. By generating the DID locally, the system gains flexibility and allows the network element to embed up-to-date stakeholder and MVNO information in the identifier. This enhances adaptability to changing network conditions and facilitates rapid deployment of secure communication processes. In an embodiment, the stakeholder identifier is associated with a mobile network operator, MNO, and/or a mobile virtual network operator, MVNO.

This broadens the scope of the invention to explicitly include both MNOs and MVNOs as stakeholders. By accommodating MVNOs, the system is compatible with a wide range of network operators, from traditional infrastructure-owning operators to virtual operators that lease network resources. Supporting MVNOs ensures that the method applies to modern telecommunications ecosystems, enhancing trust and providing tailored security approaches for niche markets.

In an embodiment, the evaluation of the stakeholder identifier based on the first criteria and/or the evaluation of the MVNO identification based on the second criteria includes determining whether the stakeholder identifier or MVNO identification corresponds to a known malicious operator or is associated with a network element generating an excessive number of requests within a predefined time period.

This provides a proactive evaluation mechanism for detecting known malicious operators and identifying suspicious communication patterns. The ability to incorporate both blacklist-based detection and traffic analysis enables the system to mitigate threats such as denial-of-service attacks, which could otherwise overwhelm the receiving network element. By implementing these evaluation methods, the system enhances network integrity and safeguards against security breaches.

The first and second criteria can differ to allow for a more nuanced and robust security evaluation. The first criteria relate to the evaluation of the Stakeholder ID, which typically reflects the identity of a mobile network operator (MNO). The second criteria concern the evaluation of the MVNO ID, representing a mobile virtual network operator. These criteria can differ because the roles and responsibilities of MNOs and MVNOs are distinct, and their associated risks and trust levels vary.

For example, consider a network element operated by a trusted MVNO (identified by its MVNO ID) that is hosted on the infrastructure of an MNO (identified by the Stakeholder ID). The MVNO specializes in IoT services for smart homes, while the MNO provides the underlying connectivity. When the second network element (receiver) receives a communication request from the first network element (sender), the request includes a DID containing both the Stakeholder ID and the MVNO ID. The receiver evaluates the Stakeholder ID based on the first criteria, which focus on the trustworthiness of the MNO. For this evaluation, the MNO is checked against a whitelist of authorized network operators or against a blacklist of unauthorized MNOs. In this case, the MNO is not on the whitelist and is flagged as potentially untrustworthy due to past reports of hosting malicious traffic.

Next, the receiver evaluates the MVNO ID based on the second criteria, which emphasize the behavior and reputation of the MVNO. This evaluation considers recent activity logs and traffic patterns, such as whether the MVNO has generated excessive communication requests or appears on a blacklist for fraudulent activity or a whitelist for trusted MVNOs. In this scenario, the MVNO ID corresponds to a highly trusted operator with no signs of malicious behavior or abnormal traffic patterns.

Given these evaluations, the receiver must decide whether to accept or deny the communication request. Although the MNO (Stakeholder ID) is flagged as untrusted, the MVNO (MVNO ID) is deemed trustworthy. To address this situation, the receiver permits the communication request under the condition that the MVNO establishes a secure tunneled connection. This approach isolates the communication from the untrusted MNO while allowing the trusted MVNO to operate safely.

The first and second criteria differ because they address distinct risks. The first criteria evaluate the MNO's infrastructure-level risks, such as compromised routing systems or vulnerabilities to large-scale DDoS attacks. In contrast, the second criteria focus on the specific reputation and behavior of the MVNO, which may include targeted fraud or poorly managed device activity. By tailoring the criteria to these roles, the system achieves a more granular and balanced evaluation of trustworthiness, ensuring that decisions to accept or reject communication requests are context-aware and effective.

In an embodiment, the determination of whether the stakeholder identifier or MVNO identification corresponds to a known malicious operator or is associated with a network element generating an excessive number of requests is performed by:
a) comparing the stakeholder identifier or MVNO identification against a blacklist of known malicious operators stored in the second network element; and/or
b) monitoring the frequency of received requests associated with the stakeholder identifier or MVNO identification within a predefined time window.

This elaborates on the technical implementation of the evaluation process. By utilizing a blacklist of malicious operators, the system can rapidly reject requests from known threats, improving response time and efficiency. Additionally, the ability to monitor the frequency of requests enables dynamic detection of emerging threats, such as newly compromised entities. The combination of static and dynamic evaluation ensures robust protection against both pre-identified and real-time security risks, enhancing overall resilience.

According to a second aspect of the invention, a decentralized identifier (DID) is disclosed that is used for secure communication between network elements, the DID comprising:
a) a unique identifier uniquely associated with a network element; and
b) a stakeholder identifier and/or a mobile virtual network operator, MVNO, identification embedded within the DID, wherein the stakeholder identifier and/or MVNO identification enables evaluation of the stakeholder's or MVNO's trustworthiness by a receiving network element.

This defines a DID structure that incorporates Stakeholder ID and/or MVNO ID directly into the identifier. Embedding trust-related information within the DID allows receiving network elements to perform immediate security evaluations without relying on extensive querying or data retrieval. This simplification accelerates the communication process, reduces dependency on external resources, and enables lightweight security assessments, enhancing efficiency and scalability.

According to a second aspect of the invention a first network element, in particular a sender, is disclosed that is configured to use and transmit a decentralized identifier (DID) for communication, in particular secure communication, the network element comprising:
a) a processing unit configured to:
   i) use a DID comprising:
      - a unique identifier uniquely associated with the network element; and
      - a stakeholder identifier and/or a mobile virtual network operator, MVNO, identification;
   ii) include the DID in a request message; and
b) a communication interface configured to transmit the request message comprising the DID to a receiving network element.

This focuses on the sender's role in initiating communication using the enhanced DID format. The inclusion of a processing unit and communication interface ensures the sender can generate or utilize a DID containing both the Stakeholder ID and MVNO ID. This configuration empowers the sender to embed trust-related information in outgoing messages, facilitating faster and more reliable decision-making by the receiver. It improves communication efficiency while ensuring compatibility with secure communication protocols.

In an embodiment, the first network element is further configured to generate the DID.

This enables the sender to independently generate the DID without external reliance. By doing so, the first network element ensures that the DID reflects accurate and up-to-date information about the stakeholder or MVNO. This autonomy streamlines the communication process, reduces dependency on third-party entities, and enhances operational flexibility. Moreover, local generation of DIDs simplifies integration into existing network systems, supporting dynamic and scalable implementations.

In an embodiment, the processing unit is configured to retrieve the MVNO identification or stakeholder identifier from a preconfigured database associated with the network operator.

This introduces a method for the sender to retrieve Stakeholder ID or MVNO ID from a preconfigured database. This ensures that the information embedded in the DID is authoritative and reflects the stakeholder's or operator's identity. Accessing a trusted database eliminates the risk of inconsistencies and provides a reliable basis for secure communication. This capability enhances the system's accuracy and ensures that the DIDs contain verified information.

In an embodiment the processing unit may extract the data out of the configuration data the first network element received at instantiation. The basic configuration contains the owner of the network element being represented by using the respective network identifier assigned to the owner/stakeholder (e.g. MNC/MCC, UUIC,...).

According to a third aspect of the invention, a second network element, in particular a receiver, is disclosed that is configured to evaluate a decentralized identifier (DID) for communication, in particular secure communication, the network element comprising:
a) a communication interface configured to receive a request message comprising a DID from a sending network element;
b) a processing unit configured to
   i) extract a stakeholder identifier and/or a mobile virtual network operator, MVNO, identification from the DID;
   ii) evaluate the stakeholder identifier based on a first criteria, in particular a first security criteria, and/or evaluate the MVNO identification based on a second criteria, in particular a second security criteria; and
   iii) determine, based on the evaluation, whether to accept or deny a request for establishing communication with the sending network element or terminate the process immediately.

This introduces a receiver element capable of evaluating the enhanced DID. By extracting the Stakeholder ID and MVNO ID, the receiver can make informed security decisions based on predefined criteria. This capability allows the receiver to reject malicious or untrustworthy requests before expending significant resources, enhancing overall network security. The evaluation process is both efficient and effective, ensuring that the communication system remains robust against potential threats.

According to a fourth aspect of the invention, a communication system is used for establishing communication, in particular secure communication, between network elements, the system comprising:
a) a first network element configured to i) use an enahnced decentralized identifier (DID) comprising a unique identifier for the first network element and a stakeholder identifier and/or a mobile virtual network operator, MVNO, identification; and ii) transmit a request message comprising the DID to a second network element;
b) a second network element configured to i) receive the request message comprising the DID; ii) extract the stakeholder identifier and/or the MVNO identification from the DID; iii) evaluate the stakeholder identifier based on a first criteria, in particular a first security criteria, and/or evaluate the MVNO identification based on a second criteria, in particular a second security criteria; iv) determine whether to accept or deny the request for communication based on the evaluation; and v) establish a communication, in particular a secure communication, between the first and second network elements if the request is accepted.

This describes a complete communication system that integrates the features of both the sending and receiving network elements. By incorporating enhanced DIDs containing Stakeholder ID and MVNO ID, the system enables secure, efficient, and dynamic communication between entities. The system supports comprehensive evaluation processes that preemptively mitigate risks and ensure the integrity of established communications. Its design ensures compatibility with diverse network architectures, including those involving MNOs and MVNOs.

In the following, preferred implementation examples of the present invention are explained with reference to the accompanying figure:
- Fig. 1:: shows a state-of-the art DID;
- Fig. 2:: message using a DID;
- Fig. 3:: shows a DID according to the invention;
- Fig. 4:: shows an inventive method according to the invention;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

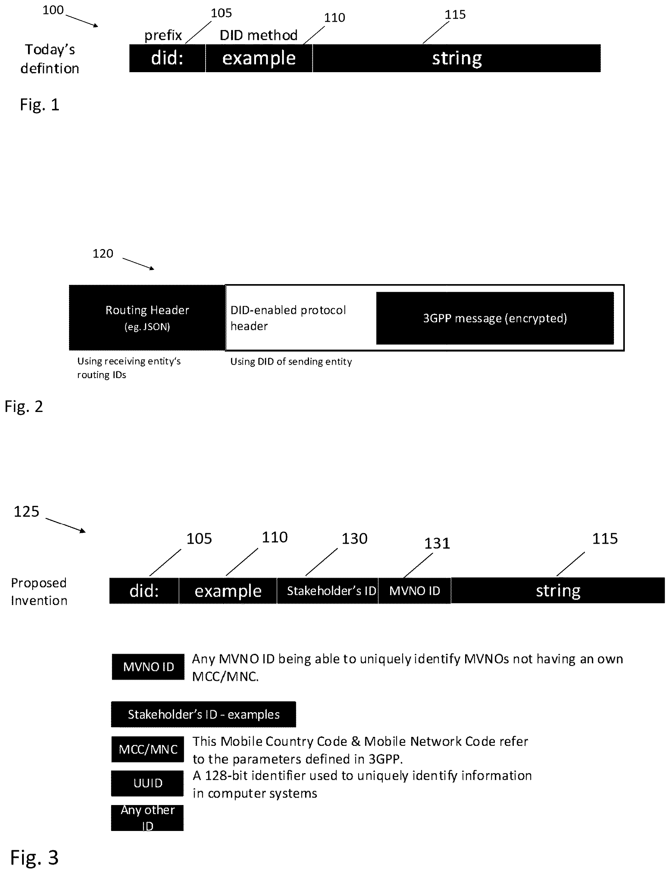

Fig. 1 illustrates a state-of-the-art decentralized identifier (DID) 100, as defined under the current standard. The DID state-of-the-art 100 comprises three key parts: a prefix 105, a DID method 110, and a string 115. The prefix 105, "did:", denotes that the identifier conforms to the decentralized identifier framework. The DID method 110 specifies the mechanism or registry used to manage and resolve the DID. The string 115 is a random sequence that uniquely identifies the network element associated with the DID.

Under the current approach, no personal data or stakeholder-specific information is embedded within the DID 100 or its associated DID document.

The term "personal data" refers broadly to any information that could reveal the identity of the DID owner or stakeholder. Consequently, the DID 100 is essentially a random string (string 115), and neither the DID nor the associated DID document provides information about the stakeholder (e.g., the network operator) or the owner of the network element.

In practical terms, this approach means that a receiving entity interacting with the DID 100 can only identify the network element through the unique string 115. No additional context about the stakeholder or ownership of the network element is available, potentially limiting trust and security assessments.

Fig. 2 illustrates a potential mechanism, labeled 120, for initiating communication between entities in a mobile environment that have not yet exchanged decentralized identifiers (DIDs). Since no formal mechanism exists for DID exchange in such environments, one approach is for the requesting entity to include its own DID in the initial message and utilize available routing identifiers (IDs) to address the message to the receiving entity.

In this mechanism, the communication involves a routing header, which uses the receiving entity's routing IDs (e.g., JSON format) to direct the message to the intended recipient. The message contains an DIDComm message that includes the DID of the sending entity, allowing the receiving entity to identify the sender and initiate a process to authenticate the sender pseudo-anonymously, meaning the receiver can verify if the sender is the owner of provided DID.. The entire 3GPP message body is encrypted.

Upon receiving the message, the receiving entity must perform several steps to decrypt the received message. These steps include verifying that the sender is indeed the holder of the claimed DID and the corresponding private key, retrieving the DID document from a Verifiable Data Registry (VDR), using the contained public key to decrypt the message body, and processing the actual request contained in the message. Is the decryption successful the receiver can be sure that the sender holds the private key to the DID and in other words is the holder of the DID. These steps enable the receiving entity to pseudo-anonymously authenticate network element.

However, a limitation of this approach is that only the use of the DID prevents the receiver from evaluating who is the sender. Not even the owner of the network entity can be derived. This delay introduces inefficiency into the process, as the receiver cannot perform an early evaluation of the sender's identity or trustworthiness before retrieving the DID document from the VDR. As a result, additional steps and resources are required to complete the process, making this mechanism less efficient for secure communication in mobile environments.

To overcome these shortcomings, the invention proposes a new kind of DID format 125.

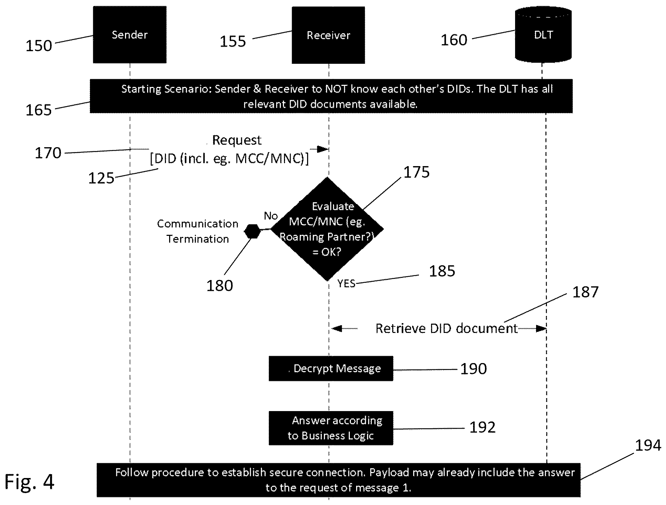

Fig. 3 and Fig. 4 collectively illustrate the inventive concept of enhancing decentralized identifiers (DIDs) to include stakeholder-specific information, enabling a first early security decision in communication processes. Fig. 3 depicts the structure of the inventive DID 125, while Fig. 4 shows a method leveraging this DID for secure communication initiation.

As shown in Figure 3, the inventive DID 125 retains the standard structure comprising the prefix 105 ("did:"), the DID method 110, and a string 115. However, the invention introduces an additional component, the Stakeholder ID 130, as part of the DID. Additionally, the DID von also comprise a MVNO ID 131. The Stakeholder ID 130 and/or the MVNO ID 131 can include parameters such as the Mobile Country Code (MCC) and Mobile Network Code (MNC) defined by 3GPP standards, a UUID (Universally Unique Identifier), or any other suitable identifier that uniquely identifies the stakeholder or operator of the network element. The inventive DID 125 can also comprise the ID of the MVNO as described above.

Figure 4 demonstrates a method utilizing the inventive DID 125 to improve communication efficiency. The process begins with a starting scenario 165, where the sender 150 and receiver 155 do not yet know each other's DIDs. A distributed ledger technology (DLT) 160 stores all relevant DID documents containing the inventive DID. The sender 150 includes the inventive DID 125, containing the Stakeholder ID 130, in a request message 170 sent to the receiver 155.

Upon receiving the request, the receiver 155 evaluates the MCC/MNC (or equivalent operator-specific parameters) embedded in the DID 125 based on predefined criteria, as shown in step 175. This evaluation allows the receiver 155 to determine whether the originating operator is trusted, such as verifying whether the operator is a valid roaming partner. If the evaluation fails (step 180), the communication request is denied, preventing further processing and mitigating potential harm from denial-of-service (DoS) attacks. If the evaluation succeeds (step 185), the receiver 155 retrieves the corresponding DID document from the DLT 160 at step 187.

The retrieved DID document allows the receiver 155 to decrypt the message at step 190 and process the request according to predefined business logic at step 192. The receiver 155 then follows established procedures to create a secure connection and provide a response, potentially including an answer to the sender's original request, as indicated in step 194.

The inclusion of the Stakeholder ID 130 in the DID 125 provides significant advantages. It allows the receiving network element 155 to make an initial security decision early in the process without needing to decrypt the entire message or perform multiple subsequent steps. This early decision-making capability reduces the load on the receiver 155, particularly in scenarios involving large numbers of incoming requests, and protects against DoS-like attacks that could otherwise overwhelm the network. By enabling the evaluation of the originating operator's trustworthiness upfront, the invention provides an efficient and secure method for initiating communication in mobile environments.

For an MVNO (Mobile Virtual Network Operator), the ID that serves as the stakeholder identifier in the DID can typically include the Mobile Country Code (MCC) and Mobile Network Code (MNC) assigned to the MVNO by regulatory authorities or the parent MNO. The MCC/MNC combination uniquely identifies the MVNO within the telecommunications ecosystem, distinguishing it from other operators.

If both IDs, meaning the ID of the MNO and of the MVNO, are provided, then at least the following four cases are possible.

In the first case, both the Stakeholder ID and MVNO ID are acceptable. This means the Stakeholder ID matches a trusted or authorized network operator, and the MVNO ID corresponds to a trusted or authorized virtual network operator. As a result, the system accepts the request for communication, and a communication, in particular a secure communication, is established between the first and second network elements. For example, this scenario might involve a major operator's network element (Stakeholder ID) working in conjunction with a reputable MVNO, such as a well-known virtual operator serving specific user groups.

In the second case, the Stakeholder ID is acceptable, but the MVNO ID is not acceptable. Here, the Stakeholder ID corresponds to a known and trusted operator, such as a mobile network operator (MNO). However, the MVNO ID is flagged as malicious, untrustworthy, or unauthorized. In this case, the system denies the request for communication to prevent potential security breaches, even though the Stakeholder ID itself is valid. For instance, this could happen when a reputable MNO (Stakeholder ID) is associated with a suspicious or blacklisted MVNO ID, perhaps due to compromise or fraudulent activities.

In the third case, the Stakeholder ID is not acceptable, but the MVNO ID is acceptable. Normally, this situation would lead to the system denying the request for communication because the Stakeholder ID matches an untrusted or unknown operator, such as a rogue operator or an unregistered MNO. However, since the MVNO is the actual host of the network element, it is possible for the system to permit the network element to establish a securely tunneled connection with its communication partner. This tunneling approach ensures that communication can still occur while bypassing the potential risks posed by the untrusted Stakeholder. In this case, the request for communication may surprisingly be accepted despite the untrusted Stakeholder ID, as the secure tunnel mitigates security concerns. For example, consider a network element operated by a trusted MVNO that is hosted on the infrastructure of an unregistered MNO. The Stakeholder ID (representing the unregistered MNO) would typically flag the connection as unsecure. However, the MVNO ID indicates that the network element belongs to a trusted MVNO. Using the MVNO's established security protocols, the network element initiates a secure tunneled connection to its communication partner, effectively isolating the communication from the untrusted Stakeholder's influence. This secure tunnel allows the communication to proceed safely, even under these conditions.

In the fourth case, both the Stakeholder ID and MVNO ID are not acceptable. This means both identifiers correspond to flagged, blacklisted, or untrusted entities. The system outright denies the request for communication to protect the receiving network element from potential harm or misuse. For example, this could involve both the MNO and MVNO being blacklisted for previous malicious activities or belonging to entities with unverifiable credentials.

## Claims

1. A method for establishing a communication between a first network element and a second network element in a communication system utilizing decentralized identifiers (DIDs), the method comprising:
a) using, by the first network element, a DID comprising:
i) a unique identifier uniquely associated with the first network element; and
ii) a stakeholder identifier associated with the first network element and/or a mobile virtual network operator, MVNO, identification associated with the first network element;
b) transmitting, from the first network element to the second network element, a request message comprising the DID;
c) receiving, at the second network element, the request message and extracting the stakeholder identifier and/or extracting the MVNO identification from the DID;
d) evaluating, at the second network element, the stakeholder identifier based on a first criteria, in particular a first security criteria, and/or evaluating the MVNO identification based on a second criteria, in particular a second security criteria;
e) determining, based on the evaluation, whether to accept or deny the request for establishing a communication; and
f) establishing a communication, in particular a secure communication, between the first and second network elements if the request is accepted.

2. The method of claim 1, wherein the first network element generates the DID.

3. The method of claim 1 or claim 2, wherein the stakeholder identifier is associated with a mobile network operator, MNO, and/or a mobile virtual network operator, MVNO.

4. The method of claim 1, wherein the evaluation of the stakeholder identifier based on the first criteria and/or the evaluation of the MVNO identification based on the second criteria includes determining whether the stakeholder identifier or MVNO identification corresponds to a known malicious operator or is associated with a network element known for generating an excessive number of requests within a predefined time period.

5. The method of claim 4, wherein the determination of whether the stakeholder identifier or MVNO identification corresponds to a known malicious operator or is associated with a network element generating an excessive number of requests is performed by:
a) comparing the stakeholder identifier or MVNO identification against a blacklist of known malicious operators stored in the second network element; and/or
b) monitoring the frequency of received requests associated with the DID, the stakeholder identifier or MVNO identification within a predefined time window.

6. A decentralized identifier (DID) for use in secure communication between network elements, the DID comprising:
a) a unique identifier uniquely associated with a network element; and
b) a stakeholder identifier and/or a mobile virtual network operator, MVNO, identification associated to a network element embedded within the DID, wherein the stakeholder identifier and/or MVNO identification enables evaluation of the stakeholder's or MVNO's trustworthiness by a receiving network element.

7. A first network element, in particular a sender, configured to use and transmit a decentralized identifier (DID) for communication, in particular secure communication, the network element comprising:
a) a processing unit configured to:
i) use a DID comprising:
- a unique identifier uniquely associated with the network element; and
- a stakeholder identifier and/or a mobile virtual network operator, MVNO, identification associated with the first network element;
ii) include the DID in a request message; and
b) a communication interface configured to transmit the request message comprising the DID to a receiving network element.

8. The first network element of claim 7, wherein the processing unit is further configured to generate the DID.

9. The first network element of claim 7 or claim 8, wherein the processing unit is configured to retrieve the MVNO identification or stakeholder identifier from a preconfigured database associated with the network operator.

10. A second network element, in particular a receiver, configured to evaluate a decentralized identifier (DID) for communication, in particular secure communication, the network element comprising:
a) a communication interface configured to receive a request message comprising a DID from a sending network element;
b) a processing unit configured to:
i) extract a stakeholder identifier and/or a mobile virtual network operator, MVNO, identification associated with the sending network element from the DID;
ii) evaluate the stakeholder identifier based on a first criteria, in particular a first security criteria, and/or evaluate the MVNO identification based on a second criteria, in particular a second security criteria; and
iii) determine, based on the evaluation, whether to accept or deny a request for establishing communication with the sending network element.

11. A communication system for establishing a communication, in particular secure communication, between network elements, the system comprising:
a) a first network element configured to:
i) use a decentralized identifier (DID) comprising a unique identifier for the first network element and a stakeholder identifier and/or a mobile virtual network operator, MVNO, identification; and
ii) transmit a request message comprising the DID to a second network element;
b) a second network element configured to:
i) receive the request message comprising the DID;
ii) extract the stakeholder identifier and/or the MVNO identification from the DID;
iii) evaluate the stakeholder identifier based on a first criteria, in particular a first security criteria, and/or evaluate the MVNO identification based on a second criteria, in particular a second security criteria;
iv) determine whether to accept or deny the request for communication based on the evaluation; and
v) establish a communication, in particular a secure communication, between the first and second network elements if the request is accepted.

## Amended claims

### Amended claims in accordance with Rule 137(2) EPC.

1. A method for establishing a communication between a first network element and a second network element in a communication system utilizing decentralized identifiers (DIDs), the method comprising:
a) using, by the first network element, a DID comprising:
i) a unique identifier uniquely associated with the first network element; and
ii) a stakeholder identifier associated with the first network element and/or a mobile virtual network operator, MVNO, identification associated with the first network element;
b) transmitting, from the first network element to the second network element, a request message comprising the DID;
c) receiving, at the second network element, the request message and extracting the stakeholder identifier and/or extracting the MVNO identification from the DID;
d) evaluating, at the second network element, the stakeholder identifier based on a first criteria, in particular a first security criteria, and/or evaluating the MVNO identification based on a second criteria, in particular a second security criteria;
e) determining, based on the evaluation, whether to accept or deny the request for establishing a communication; and
f) establishing a communication, in particular a secure communication, between the first and second network elements if the request is accepted.

2. The method of claim 1, wherein the first network element generates the DID.

3. The method of claim 1 or claim 2, wherein the stakeholder identifier is associated with a mobile network operator, MNO, and/or a mobile virtual network operator, MVNO.

4. The method of claim 1, wherein the evaluation of the stakeholder identifier based on the first criteria and/or the evaluation of the MVNO identification based on the second criteria includes determining whether the stakeholder identifier or MVNO identification corresponds to a known malicious operator or is associated with a network element known for generating an excessive number of requests within a predefined time period.

5. The method of claim 4, wherein the determination of whether the stakeholder identifier or MVNO identification corresponds to a known malicious operator or is associated with a network element generating an excessive number of requests is performed by:
a) comparing the stakeholder identifier or MVNO identification against a blacklist of known malicious operators stored in the second network element; and/or
b) monitoring the frequency of received requests associated with the DID, the stakeholder identifier or MVNO identification within a predefined time window.

6. A decentralized identifier (DID) for use in secure communication between network elements, the DID comprising:
a) a unique identifier uniquely associated with a network element; and
b) a stakeholder identifier and/or a mobile virtual network operator, MVNO, identification associated to a network element embedded within the DID, wherein the stakeholder identifier and/or MVNO identification is represented in a dedicated field within the DID string, the field containing standardized parameters such as a Mobile Country Code (MCC), Mobile Network Code (MNC), or UUID, thereby enabling evaluate the stakeholder's or MVNO's trustworthiness by a receiving network element.

7. A first network element, in particular a sender, configured to use and transmit a decentralized identifier (DID) for communication, in particular secure communication, the network element comprising:
a) a processing unit configured to:
i) use a DID comprising:
- a unique identifier uniquely associated with the network element; and
- a stakeholder identifier and/or a mobile virtual network operator, MVNO, identification associated with the first network element;
ii) include the DID in a request message; and
b) a communication interface configured to transmit the request message comprising the DID to a receiving network element.

8. The first network element of claim 7, wherein the processing unit is further configured to generate the DID.

9. The first network element of claim 7 or claim 8, wherein the processing unit is configured to retrieve the MVNO identification or stakeholder identifier from a preconfigured database associated with the network operator.

10. A second network element, in particular a receiver, configured to evaluate a decentralized identifier (DID) for communication, in particular secure communication, the network element comprising:
a) a communication interface configured to receive a request message comprising a DID from a sending network element;
b) a processing unit configured to:
i) extract a stakeholder identifier and/or a mobile virtual network operator, MVNO, identification associated with the sending network element from the DID;
ii) evaluate the stakeholder identifier based on a first criteria, in particular a first security criteria, and/or evaluate the MVNO identification based on a second criteria, in particular a second security criteria; and
iii) determine, based on the evaluation, whether to accept or deny a request for establishing communication with the sending network element.

11. A communication system for establishing a communication, in particular secure communication, between network elements, the system comprising:
a) a first network element configured to:
i) use a decentralized identifier (DID) comprising a unique identifier for the first network element and a stakeholder identifier and/or a mobile virtual network operator, MVNO, identification; and
ii) transmit a request message comprising the DID to a second network element;
b) a second network element configured to:
i) receive the request message comprising the DID;
ii) extract the stakeholder identifier and/or the MVNO identification from the DID;
iii) evaluate the stakeholder identifier based on a first criteria, in particular a first security criteria, and/or evaluate the MVNO identification based on a second criteria, in particular a second security criteria;
iv) determine whether to accept or deny the request for communication based on the evaluation; and
v) establish a communication, in particular a secure communication, between the first and second network elements if the request is accepted.
